# NOUVEAU FASCICULE DE BREVET EUROPEEN

(11) **EP 0 497 664 B2**
(45) Date de publication et mention de la décision concernant l'opposition: **23.05.2001**
(45) Mention de la délivrance du brevet: 08.05.1996
(21) Numéro de dépôt: 92400183.7
(22) Date de dépôt: 24.01.1992
(51) Int. Cl.: G01D 13/28

(54) **Aiguille de cadran indicateur de tableau de bord à changement de couleur**
Zeigerinstrument mit veränderlicher Farbanzeige für Armaturenbrett
Pointer instrument with changeable colour for dashboard

(30) Priorité: 28.01.1991 FR 9100914
(43) Date de publication de la demande: 05.08.1992
(73) Titulaire: SOCIETE D'APPLICATIONS GENERALES D'ELECTRICITE ET DE MECANIQUE S A G E M, F-75783 Paris Cedex 16 (FR)
(72) Inventeur: Quintana, Jean, F-95000 Cergy (FR)
(74) Mandataire: Bloch, Gérard

(56) Documents cités:
- EP-A- 0 180 726
- DE-A- 2 925 578
- DE-A- 3 425 029
- DE-A- 3 626 957
- DE-A- 3 817 874
- DE-U- 1 650 772
- US-A- 2 410 064
- US-A- 2 831 453
- US-A- 3 559 616
- US-A- 4 300 470
- PATENT ABSTRACTS OF JAPAN vol. 9, no. 227 (P-338)(1950) 13 Septembre 1985 & JP-A-60085326 (NIPPON DENSO K.K.) 14 mai 1985
- A.M.Blumenfeld, S.E. Jones, "Parts That Glow", Machine Design, 29.10.1959

## Description

La présente invention concerne une aiguille de cadran indicateur de tableau de bord, par exemple de véhicule automobile, comportant un index transparent, présentant une face interne de réflexion de lumière et d'observation tournée vers l'extérieur, un corps d'aiguille, agencé pour, par une tête extérieure, supporter l'index et recevoir de la lumière artificielle d'un conduit optique, la guider et la renvoyer sur la face d'observation de l'index, un cache, en forme de cabochon, recouvrant la tête extérieure du corps d'aiguille et une partie de l'index, un marquage de couleur, tourné vers l'extérieur, s'étendant le long de la face d'observation de la partie de l'index en saillie hors du cadre de la tête du corps d'aiguille.

En lumière du jour, celle-ci est réfléchie sur la face d'observation de l'index, et donc sur le côté coloré du marquage, si bien que l'index, pour un observateur, apparait dans la couleur du marquage. De nuit, en lumière artificielle provenant du conduit de lumière, pour que index, toujours par reflexion de la lumière sur sa face d'observation, apparaisse à l'observateur dans une couleur différente de celle du marquage, il faudrait que cette lumière artificielle soit elle-même colorée. Une telle solution n'est toutefois pas appropriée car elle affecterait la couleur dans laquelle apparaitrait l'ensemble du tableau de bord.

La présente invention vise à proposer une solution satisfaisante au problème de l'observation diurne et nocturne d'un index d'aiguille respectivement dans deux couleurs différentes, solution qui n'est pas proposée par DE-A-3 817 874 qui concerne une aiguille du type défini ci-dessus.

A cet effet, la présente invention concerne une aiguille de cadran indicateur de tableau de bord selon la revendication 1.

De jour, l'autre, ou deuxième, marquage est caché et l'index apparait dans la couleur du premier marquage. De nuit, par un éclairage artificiel, le second marquage devient fonctionnel pour altérer, par rapport à l'observation diurne, la couleur dans laquelle apparait l'index.

L'invention concerne donc une aiguille à index bicolore ou, plus exactement, à index d'une couleur changeant de l'une à l'autre des deux observations diurne et nocturne.

On notera que si le premier marquage s'étend le long de la face d'observation de la partie d'index en saillie hors du cabochon, il peut ne s'étendre que sur une portion, certes importante, de cette partie d'index ou, au contraire, s'étendre au-delà, également le long d'une petite portion de la partie d'index recouverte par le cabochon.

De même, le second marquage de l'autre, ou deuxième, couleur peut aussi ne s'étendre que sur une portion de la partie d'index recouverte par le cabochon mais, par contre, pas au-delà.

De préférence, l'autre marquage s'étend également dans un même plan le long d'une face de la tête extérieure du corps d'aiguille et se présente avantageusement sous une forme sensiblement annulaire.

Dans ce cas, le corps d'aiguille peut comporter une première surface de réflexion de lumière et de réfraction de lumière réfléchie sur une seconde surface de réflexion.

De préférence encore, le matériau de l'autre marquage est un matériau diffusant.

Les marquages peuvent être constitués d'un film coloré appliqué à chaud, d'une couche d'encre colorée appliquée par tampographie, à l'aide d'un tampon, ou encore, pour ce qui concerne le second marquage d'observation nocturne, d'une pastille colorée surmoulée au moins en partie dans un évidement de l'index.

L'invention sera mieux comprise à l'aide de la description suivante de l'aiguille de l'invention en référence à l'unique vue en coupe de celle-ci, en annexe.

L'aiguille comporte un index transparent 1, un corps d'aiguille 2 et un cache 3, en forme de cabochon. L'index 1 présente une face ici plane interne 4 de reflexion de lumière qui est une face d'observation tournée vers l'extérieur, par rapport à une direction d'observation illustrée par la flèche 5.

Le corps d'aiguille 2 comporte une tête extérieure 6, supportant l'index 1, et un pied support intérieur ici cylindrique 7, d'axe 8. Un alésage 9, d'axe 8, traverse le pied 7 et la tête 6 du corps d'aiguille 2, pour le montage de l'aiguille. La tête d'aiguille 6 est destinée à recevoir, d'un conduit-optique 10, de la lumière artificielle d'une source et elle présente ici une surface 11 de renvoi de lumière, tout comme l'index 1, une surface de renvoi 12, plus grande que la surface 11, ménagée par un évidement entre la tête 6 et l'index 1, ces surfaces 11, 12 étant disposées pour renvoyer la lumière émise par la source et guidée à travers la tête 6 sur la face de réflexion 4 de l'index. Pour ce qui concerne la surface de renvoi 11, éloignée de l'index 1, elle est disposée pour renvoyer la lumière à travers la tête 6, sensiblement parallèlement à la face 4 de l'index, la lumière ayant traversé ainsi la tête 6 étant réfractée par la surface de renvoi 12, avant d'être réfléchie sur la face d'observation 4 de l'index.

Le cabochon 3 recouvre la tête 6 du corps d'aiguille et une partie 13 de l'index 1. Il est fixé, de façon amovible, sur la tête 6 du corps d'aiguille 2 ici par clipsage, non représenté par souci de clarté mais à la manière de la fixation d'une masselotte tubulaire d'équilibrage 17, fixée au cabochon 3, par un pion 16, solidaire du cabochon 3 et sur lequel la masselotte 17 est clipsée.

La face d'observation de la partie 13 de l'index 1 recouverte par le cabochon 3 présente une portion 14 de raccordement au pied 7 et à la tête 6, légèrement décalée, vers l'extérieur, pour former un évidement 15, et qui se prolonge dans un même plan par une portion de surface annulaire 15' sous la tête d'aiguille 6. Dans cet évidement 15 et sur cette portion annulaire 15' a été surmoulée une pastille annulaire de marquage 19 en matériau coloré translucide et diffusant. Ce matériau est au moins translucide et pourrait être aussi transparent mais non diffusant.

Le long de la face d'observation 4, sur son côté tourné vers le pied 7, de la partie de l'index 1 en saillie hors du cabochon 3, s'étend un film de marquage 20 d'une couleur autre que celle de la pastille 19 et présentant au moins un côté coloré tourné vers l'extérieur. Le film 20 s'étend légèrement au-delà de cette partie d'index en saillie, le long d'une petite portion de la partie d'index recouverte par le cabochon 3.

Lors d'une observation diurne, les rayons de lumière naturelle, dirigés selon la flèche 5, frappent la face 4 sur laquelle ils se réfléchissent, la pastille 19 étant cachée par le cabochon 3, et l'observateur voit l'index 1 dans la couleur du film 20.

Lors d'une observation nocturne, les rayons de lumière artificielle, provenant du conduit 10, pénètrent, à travers la pastille 19, dans la tête d'aiguille 6 dans laquelle ils sont guidés jusqu'aux surfaces 12 et 11.

Compte tenu de leurs tailles respectives, la surface 12 réfléchit plus de lumière que la surface 11. La lumière réfléchie sur la surface 11 traverse la tête 6 avant d'être réfractée par la surface 12 dans l'index 1. Les rayons de lumière réfléchis sur la surface 12 et réfractés par elle sont réfléchis sur la face 4 de l'index. L'observateur voit alors l'index non plus dans la couleur du film 20 mais dans une couleur altérée par celle de la pastille 19. L'index 1 apparait donc dans deux couleurs différentes selon qu'il est observé de jour ou sous un éclairage artificiel de nuit. La contribution de la surface de renvoi 11 à l'altération de la couleur apparente de l'index est bien moins importante que celle de la surface 12.

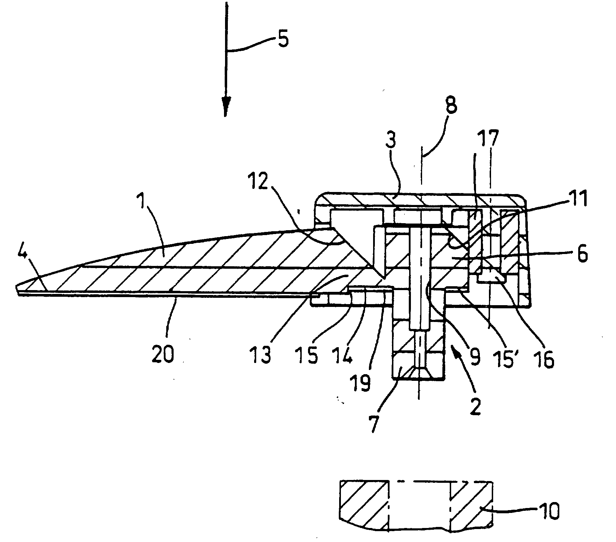

## Revendications

1. Aiguille de cadran indicateur de tableau de bord, comportant un index transparent (1), présentant une face interne (4) de réflexion de lumière et d'observation tournée vers l'extérieur, un corps d'aiguille (2), agencé pour, par une tête extérieure (6), supporter l'index (1) et recevoir de la lumière artificielle d'un conduit optique (10), la guider et la renvoyer sur la face d'observation (4) de l'index (1), un cache (3) recouvrant la tête extérieure (6) du corps d'aiguille et une partie (13) de l'index (1), un marquage de couleur (20), tourné vers l'extérieur, s'étendant le long de la face (4) d'observation de la partie de l'index (1) en saillie hors du cache (3) de la tête du corps d'aiguille, aiguille caractérisée par le fait qu'un autre marquage (19) au moins translucide d'une autre couleur s'étend le long de la face d'observation de la partie (13) de l'index recouverte par le cache (3), la face d'observation tournée vers l'extérieur restant une face de réflexion de jour comme de nuit, pour que, sous un éclairage artificiel de nuit, l'index, après réflexion sur la face d'observation (4) de la lumière artificielle ayant traversé ledit autre marquage (19), soit vu dans une couleur altérée par rapport à celle du marquage (20) s'étendant le long de la face d'observation (4).

2. Aiguille selon la revendication 1, dans laquelle l'autre marquage (19) s'étend dans un même plan le long d'une face (15') de la tête (6) du corps d'aiguille.

3. Aiguille selon la revendication 2, dans laquelle l'autre marquage (19) a une forme sensiblement annulaire.

4. Aiguille selon l'une des revendications 2 et 3, dans laquelle le corps d'aiguille comporte une première surface (12) de réflexion de lumière et de réfraction de lumière réfléchie sur une seconde surface de réflexion (11).

5. Aiguille selon l'une des revendications 1 à 4, dans laquelle le matériau de l'autre marquage (19) est diffusant.

6. Aiguille selon l'une des revendications 1 à 5, dans laquelle l'autre marquage comporte une pastille (19).

7. Aiguille selon la revendication 6, dans laquelle la pastille (19) est surmoulée au moins en partie dans un évidement (15) de l'index (1).

8. Aiguille selon l'une des revendications 1 à 5, dans laquelle l'un au moins des marquages (20) comporte un film.

9. Aiguille selon l'une des revendications 1 à 5, dans laquelle l'un au moins des marquages comporte une couche d'encre.

## Patentansprüche

1. Zeiger für ein Anzeigeinstrument einer Instrumententafel, enthaltend eine transparente Zunge (1), die eine nach außen gerichtete, lichtreflektierende Betrachtungs-Innenfläche (4) aufweist, einen Zeigerkörper (2), der dazu dient, mittels eines Außenkopfes (6) die Zunge (1) zu tragen und das Kunstlicht von einem optischen Leiter (10) zu empfangen, es weiterzuleiten und auf die Betrachtungsfläche (4) der Zunge (1) zu richten, eine Abdeckung (3), die den Außenkopf (6) des Zeigerkörpers und einen Abschnitt (13) der Zunge (1) überdeckt, eine nach außen gerichtete Farbmarkierung (20), die sich entlang der Betrachtungsfläche (4) des Abschnittes der Zunge (1) erstreckt, der außerhalb der Abdekkung (3) für den Kopf des Zeigerkörpers liegt, dadurch gekennzeichnet, daß eine weitere, mindestens transluzide Markierung (19) mit einer anderen Farbe sich entlang der Betrachtungsfläche des von der Abdeckung (3) überdeckten Abschnittes (13) der Zunge erstreckt, wobei die nach außen gerichtete Betrachtungsfläche (4) bei Tage sowie bei Nacht eine reflektierende Fläche bleibt, so daß, bei einer künstlichen Beleuchtung während der Nacht, die Zunge, nach Reflektion auf der Betrachtungsfläche (4) des Kunstlichtes das die weitere Markierung (19), durchdrang, in einer Farbe gerchen wird, die bezüglich derjenigen der Markierug (20) die sich entlang der Betrachtungsfläche (4) erstreckt, verändert ist.

2. Zeiger nach Anspruch 1, bei dem die weitere Markierung (19) sich in der gleichen Ebene entlang einer Fläche (15') des Kopfes (6) des Zeigerkörpers erstreckt.

3. Zeiger nach Anspruch 2, bei dem die weitere Markierung (19) eine im wesentlichen ringförmige Form hat.

4. Zeiger nach einem der Ansprüche 2 und 3, bei dem der Zeigerkörper eine erste Oberfläche (12) zur Reflektion des Lichtes und zur Brechung des Lichtes aufweist, das auf eine zweite Reflektionsfläche (11) reflektiert wird.

5. Zeiger nach einem der Ansprüche 1 bis 4, bei der das Material der weiteren Markierung (19) diffuse Eigenschaften hat.

6. Zeiger nach einem der Ansprüche 1 bis 5, bei der die weitere Markierung ein Plättchen (19) umfaßt.

7. Zeiger nach Anspruch 6, bei dem das Plättchen (19) zumindest teilweise in einer Aussparung (15) der Zunge (1) eingebettet ist.

8. Zeiger nach einem der Ansprüche 1 bis 5, bei der mindestens eine der Markierungen (20) eine Beschichtung aufweist.

9. Zeiger nach einem der Ansprüche 1 bis 5, bei der mindestens eine der Markierungen eine Tintenbeschichtung enthält.

## Claims

1. Dashboard instrument dial needle, including a transparent indicator (1), having an internal light-reflective and observation face (4) facing outwards, a needle body (2) arranged so as, by means of an outside head (6) to support the indicator (1) and to receive artificial light from an optical duct (10), to guide and send it to the observation face (4) of the indicator (1), a mask (3) covering the outside head (6) of the needle body and a part (13) of the indicator (1), a coloured marking (20), facing outwards, extending along the observation face (4) of that part of the indicator (1) projecting from the mask (3) of the head of the needle body, which needle is characterized in that an at least translucent other marking (19), having another colour, extends along the observation face of that part (13) of the indicator covered by the mask (3), the observation face (4) facing outwards remaining a reflective face day and night as well, so that, under night artificial light, the indicator, after reflection, onto the observation face (4), of the artificial light having gone though said other marking (19), is seen in a colour altered with respect to the one of the marking (20) extending along the observation face (4).

2. Needle according to claim 1, in which the other masking (19) extends in the same plane along one face (15') of the head (6) of the needle body.

3. Needle according to claim 2, in which the other marking (19) has a substantially annular shape.

4. Needle according to either of claims 2 and 3 in which the needle body includes a first light-reflective surface (12) which refracts the light reflected at a second reflective surface (11).

5. Needle according to one of claims 1 to 4, in which the material of the other marking (19) is scattering.

6. Needle according to one of claims 1 to 5, in which the other marking includes an insert (19).

7. Needle according to claim 6, in which the insert (19) is at least partly overmoulded in a housing (15) in the indicator (1).

8. Needle according to one of claims 1 to 5, in which one at least of the markings (20) includes a film.

9. Needle according to one of claims 1 to 5, in which one at least of the markings includes a layer of ink.
